# EUROPEAN PATENT SPECIFICATION

(11) **EP 2 803 222 B1**
(45) Date of publication and mention of the grant of the patent: **18.07.2018**
(21) Application number: 12854654.6
(22) Date of filing: 04.12.2012
(51) Int. Cl.: H04W 16/14, H04W 72/12, H04L 1/18, H04W 24/10, H04W 88/06

(54) **METHOD AND SYSTEM FOR HANDLING IN-DEVICE CO-EXISTENCE INTERFERENCE IN USER EQUIPMENT**
VERFAHREN UND VORRICHTUNG ZUR HANDHABUNG EINER VORRICHTUNGSINTERNEN KOEXISTENZ-INTERFERENZ IN EINER BENUTZEREINRICHTUNG
PROCÉDÉ ET SYSTÈME DE GESTION DE BROUILLAGE DE COEXISTENCE INTRA-DISPOSITIF DANS ÉQUIPEMENT UTILISATEUR

(30) Priority: 05.12.2011 IN 4238CH2011
(43) Date of publication of application: 19.11.2014
(73) Proprietor: Samsung Electronics Co., Ltd., Suwon-si, Gyeonggi-do 443-742 (KR)
(72) Inventor: BAGHEL, Sudhir Kumar, Bangalore 560093 (IN); INGALE, Mangesh Abhimanyu, Bangalore 560093 (IN); MANEPALLI, Venkateswara Rao, Bangalore 560093 (IN)
(74) Representative: Nederlandsch Octrooibureau
(86) International application number: PCT/KR2012/010437
(87) International publication number: WO 2013/085256

(56) References cited:
- EP-A1- 2 315 492
- WO-A1-2011/123555
- US-A1- 2010 136 998
- US-A1- 2010 203 832
- US-A1- 2011 158 211
- US-A1- 2011 243 047
- "3rd Generation Partnership Project; Technical Specification Group Radio Access Network; Evolved Universal Terrestrial Radio Access (E-UTRA); Study on signalling and procedure for interference avoidance for in-device coexistence (Release 11)", 3GPP STANDARD; 3GPP TR 36.816, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.1.0, 2 October 2011 (2011-10-02), pages 1-44, XP050554322, [retrieved on 2011-10-02]
- SAMSUNG: "Possible FDM solution for in-device coexistence interference mitigation", 3GPP DRAFT; R2-105573, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an; 20101011, 5 October 2010 (2010-10-05), XP050452633, [retrieved on 2010-10-05]
- SAMSUNG: "Unified signalling approach for in-device coexistence", 3GPP DRAFT; R2-116130, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 8 November 2011 (2011-11-08), XP050564454, [retrieved on 2011-11-08]
- CMCC ET AL: "Framework and procedure of in-device coexistence interference avoidance", 3GPP DRAFT; R2-110391 FRAMEWORK AND PROCEDURE OF IN-DEVICE COEXISTENCE INTERFERENCE AVOIDANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dublin, Ireland; 20110117 - 20110121, 11 January 2011 (2011-01-11), XP050605603, [retrieved on 2011-01-11]

## Description

### Technical Field

The present invention relates to a method and system of mitigating in-device coexistence interference within user equipment operating in a wireless network system. More specifically, the present invention provides solution for in-device coexistence interference in the user equipment operating multiple radios simultaneously.

### Background Art

Providing multiple services through the user equipment using multiple radio technologies is one of the advantages of modern communication systems. For example, the user equipment may support multiple communication technologies such as Long Term Evolution (LTE) radio, Industrial Scientific and Medical (ISM) radio and Global Navigation and Satellite System (GNSS) receiver. LTE is a fourth generation communication technology for high speed and efficient data transfer between the user equipment and other entities in a network. ISM radios include technologies such as WiFi Bluetooth, etc. operating in the ISM band. GNSS includes technologies such as Global Positioning Services (GPS) used for geographical location identification. The user equipment allows simultaneous operation of such technologies in their respective frequency bands for different services.

US2011/0243047 relates to a method including identifying coexistence issues among radios in a User Equipment (UE). The method also includes submitting a message to a base station that requests reconfiguring of a timing schedule of a first one of the supported radios to provide for periods of inactivity of the first one of the supported radios. The inactive periods provide operating periods for at least a second one of the supported radios. The inactive periods may be measurement gaps.

WO 2011/123555 relates to a method of wireless communication includes receiving signaling from a served User Equipment (UE), via a radio access technology, indicating an interfering technology associated with coexistence issues experienced by the served UE. The method also includes calculating future sub frames expected to experience coexistence issues based on previous subframes estimated to have experienced coexistence issues.

"3rd Generation Partnership Project; Technical Specification Group Radio Access Network; Evolved Universal Terrestrial Radio Access (E-UTRA); Study on signalling and procedure for interference avoidance for in-device coexistence (Release 11)", 3GPP STANDARD; 3GPP TR 36.816, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ;FRANCE, vol. RAN WG2, no. V11.1.0, 2 October 2011 (2011 -10-02), pages 1 -44, relates to different interference scenarios between LTE radio and other radio technologies and solution to mitigate these interferences.

SAMSUNG: "Possible FDM solution for in-device coexistence interference mitigation", 3GPP DRAFT; R2-105573, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an; 20101011,5 October 2010 (2010-10-05). Relates to unified signalling mechanism so that UE can inform presence of in-device coexistence, it's preference for FDM or TDM solution and associated measurement report/gap patterns of UE availability or non availability.

SAMSUNG: "Unified signalling approach for in-device coexistence", 3GPP DRAFT; R2-116130, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 8 November 2011 (2011 -11 -08), relates to a method wherein FDM and TDM assistance information should be communicated together to eNB in one step unified signaling when UE is indicating in-device co-existence problem to the eNB. CMCC ET AL: "Framework and procedure of in-device coexistence interference avoidance", 3GPP DRAFT; R2-110391 FRAMEWORK AND PROCEDURE OF INDEVICE COEXISTENCE INTERFERENCE AVOIDANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dublin, Ireland; 20110117 - 20110121, 11 January 2011 (2011-01-11), relates to procedures of coexistence interference avoidance.

### Disclosure of Invention

### Technical Problem

One of the challenges of such multiple radio technologies co-existing and operating simultaneously within the same user equipment is interference in reception within frequency band of one radio by transmission of another radio within adjacent frequency band. This interference problem due to simultaneously transmission/reception of multiple radios in the user equipment is referred as in-device coexistence (IDC) interference problem.

### Solution to Problem

The present invention is defined by the accompanying independent claims. Implementation aspects of the invention, also referred to embodiments, are defined by the dependent claims.

### Brief Description of Drawings

Figure 1 illustrates a block diagram of a wireless communication system for handling in-device co-existence interference between a Long Term Evolution (LTE) module and a non-LTE Module in user equipment, according to one embodiment.
Figure 2 is a process flowchart illustrating an exemplary method of handling in-device co-existence interference in user equipment, according to one embodiment.
Figure 3 is a schematic representation depicting interference scenarios of different frequencies in the user equipment when LTE and non-LTE operations are carried out simultaneously.
Figure 4 is a schematic representation illustrating one of trigger criterions configured to determine presence of in-device co-existence interference in the user equipment, according to one embodiment.
Figure 5 is a schematic representation illustrating another trigger criterion configured to determine presence of in-device co-existence interference in user equipment, according to one embodiment.
Figure 6a is a flow diagram illustrating a detailed method of reporting in-device co-existence interference in the user equipment, according to one embodiment.
Figure 6b is a flow diagram illustrating a method of configuring Frequency Division Multiplexing (FDM) solution for mitigating the in-device co-existence interference in user equipment, according to one embodiment.
Figure 6c is a flow diagram illustrating another method of configuring a Time Division Multiplexing (TDM) solution for mitigating in-device co-existence interference in user equipment, according to one embodiment.
Figure 6d is a flow diagram illustrating a method of reporting the in-device co-existence interference in the user equipment, according to another embodiment.
Figure 6e is a flow diagram illustrating a method of reporting change of status the in-device co-existence interference in the user equipment, according to yet another embodiment.
Figure 7a is a flow diagram illustrating a method of configuring a solution for mitigating the in-device co-existence interference in the user equipment, according to one embodiment.
Figure 7b is a flow diagram illustrating a method of configuring a solution for mitigating the in-device co-existence interference in the user equipment, according to another embodiment.
Figure 7c is a flow diagram illustrating a method of configuring a solution for mitigating the in-device co-existence interference in the user equipment, according to yet another embodiment.
Figure 7d is a flow diagram illustrating a method of configuring a solution for mitigating the in-device co-existence interference in the user equipment, according to further another embodiment.
Figure 7e is a flow diagram illustrating a method of configuring a solution for mitigating the in-device co-existence interference in the user equipment, according to yet a further embodiment.
Figure 7f is a flow diagram illustrating a method of configuring a solution for mitigating the in-device co-existence interference in the user equipment, according to still another embodiment.
Figure 8a is a flow diagram illustrating behavior of user equipment upon handover of a wireless connection from a source network entity to a target network entity, according to further another embodiment.
Figure 8b is a flow diagram illustrating another behavior of user equipment upon handover of a wireless connection from the source network entity to the target network entity, according to further another embodiment.
Figure 8c is a flow diagram illustrating yet another behavior of user equipment upon handover of a wireless connection from the source network entity to the target network entity, according to further another embodiment.
Figure 9 is a block diagram illustrating user equipment, in accordance with an embodiment of the present invention.
Figure 10 is a block diagram of a network entity in accordance with an embodiment of the present invention.

The drawings described herein are for illustration purposes only and are not intended to limit the scope of the present disclosure in any way.

### Mode for the Invention

The present invention provides a method and system for handling in-device co-existence interference in user equipment. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

In the document, the terms 'radio frequency interference' and 'in-device co-existence interference' and 'interference' are used interchangeably throughout the document.

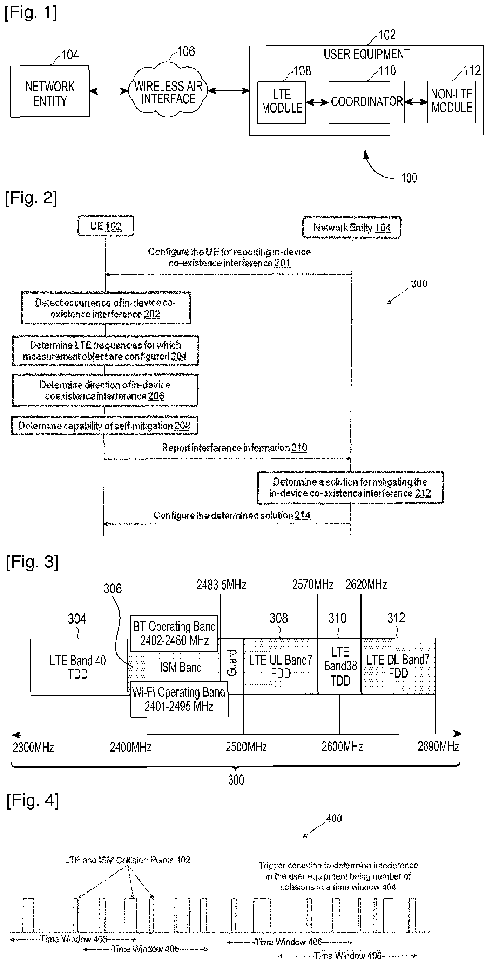

Figure 1 illustrates a block diagram of a wireless operating environment 100, where each frequency band is dedicated for a corresponding wireless service, according to one embodiment. The wireless operating environment 100 includes a network entity 104 (e.g., evolved node B (eNB)) and a user equipment (UE) 102 connected via a wireless air interface 106 based on the Long Term Evolution (LTE) technology. The UE 102 includes a LTE module 108, a non-LTE module 112, and a coordinator 110. The non-LTE module 112 may be either used for providing short range wireless services such as WiFi or Bluetooth within the Industrial Scientific and Medical (ISM) frequency band. Alternatively, the non-LTE module may be used for providing geographical location identification and positioning services using Global Navigation Satellite System (GNSS) receiver. The LTE module 108 operates on a LTE carrier frequency while the non-LTE module 112 operates on a non-LTE frequency (e.g., ISM band).

According to one embodiment, the coordinator 110 is configured for handling in-device co-existence interference between LTE carrier frequencies associated with measurement objects and non-LTE carrier frequency by performing the steps illustrated in Figure 2.

Figure 2 is a process flowchart 200 illustrating an exemplary method of handling in-device coexistence interference in user equipment, according to one embodiment. Consider that, the LTE module 108 is configured for performing measurements on one or more measurement objects which represent LTE carrier frequencies among serving or non-serving frequencies and the non-LTE module 112 is configured for operating on a non-LTE frequency. An in-device coexistence interference may occur when both the LTE module 108 and the non-LTE module 112 simultaneously operate on their respective frequencies. The process of handling in-device co-existence interference between carrier frequencies corresponding to measurement objects and non-LTE frequencies is described in following steps 202-214.

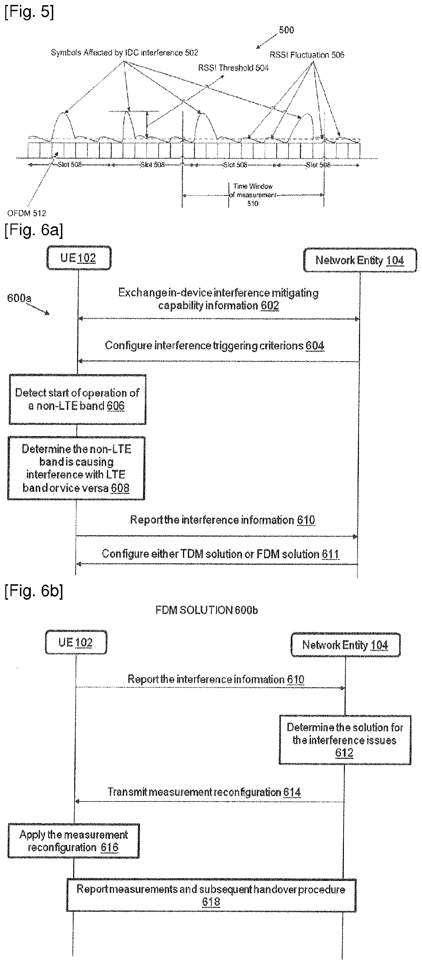

At step 201, the network entity 104 configures the user equipment 102 for reporting the in-device coexistence interference between carrier frequencies corresponding to measurement objects and non-LTE frequencies. In one embodiment, the user equipment 102 is configured for reporting occurrence of in-device co-existence interference anytime during the connected mode of operation. In another embodiment, the user equipment 102 is configured for reporting occurrence of in-device co-existence interference upon transitioning from idle mode to connected mode of operation. In yet another embodiment, the user equipment 102 is configured for reporting in-device co-existence interference after completion of successful handover of the wireless connection from a source base station to a target base station. At step 202, the user equipment 102 detects occurrence of in-device co-existence interference between one or some of LTE carrier frequencies and a non-LTE frequency during simultaneous operation of the user equipment 102. The conditions for determining presence of in-device co-existence interference in the user equipment 102 are illustrated in Figures 4 and 5.

At step 204, the user equipment 102 determines one or more LTE carrier frequencies among the carrier frequencies for which measurement object is configured suffering from the in-device coexistence interference. At step 206, the user equipment 102 determines direction of in-device coexistence interference between the determined LTE carrier frequencies and the non-LTE frequency. In some embodiments, the user equipment 102 identifies a victim and an aggressor of the in-device co-existence interference. In these embodiments, the UE 102 sets a value in interference information to indicate direction of in-device co-existence interference to the network entity 104. The value may be 'EUTRA', 'other' and 'both'. For example, the value 'EUTRA' indicates that the victim of in-device co-existence interference are LTE carrier frequencies, the value 'other' indicates that the victim of the in-device co-existence interference is the non-LTE frequency and the value 'both' indicates that both the LTE carrier frequency and the non-LTE frequency are victims of the in-device co-existence interference. Based on the value set, the network entity 104 ascertains the direction of in-device co-existence interference.

It is appreciated that the technique of identifying in-device co-existence interference is well known to the person skilled in the art. At step 208, the user equipment 102 determines whether the in-device co-existence interference between any of the determined LTE carrier frequencies and the non-LTE frequency can be mitigated by itself.

If the in-device co-existence interference cannot be mitigated, at step 210, the user equipment 102 reports interference problem to the network entity 104. The in-device co-existence interference indication to the network entity 104 includes information associated with the LTE carrier frequencies. For example, the user equipment 102 may report a measurement object identifier of the at least one carrier frequency, the direction of interference (DOI), use case scenario in which the in-device co-existence interference is happening like, BT (VOIP), BT (Multimedia Service), WiFi router, WiFi offload, GNSS and time domain multiplexing assistance information. The time domain multiplexing (TDM) assistance information may include Hybrid Automatic Repeat Request (HARQ) bit map pattern or Discontinuous Reception (DRX) parameters.

In a Wi-Fi offload case (Wi-Fi Beacon Reception), a one gap pattern and associated information is also sent specifically for beacon reception as part of TDM assistance data. The gap pattern for WiFi can be handled by providing LTE SFN number, where the latest beacon occurred (at the time of sending the indication), Beacon periodicity, and guard period around expected beacon reception to the network entity 104. This information is required as beacon transmission by an access point can be delayed for few milliseconds due to the reason that the medium was not free. Upon reception of this information, the network entity 104 can try not to schedule LTE uplink data in those subframes which correspond to expected beacon reception time and guard period around it. This will ensure that the UE 102 can receive the beacon without any issue.

The UE 102 keeps using the above gap pattern for WiFi beacon handling. However, it is possible that, because of some time drift caused by clock misalignment or other factors, over a period of time beacon reception expected time might fall outside the negotiated beacon reception gap pattern. Whenever the UE 102 experiences such situation then that situation can be used as trigger criterion to send indication informing in-device co-existence interference to the network entity 104. The indication can contain FDM assistance data and /or TDM assistance data for normal WiFi data operation and/or beacon handling related parameter for gap pattern and specially LTE SFN (Super Frame Number), where the last beacon reception was received by the WiFi. However, in the portable router case (Wi-Fi Beacon transmission), there is no need for any special gap pattern. As the UE 102 acts as an access point, the UE 102 can delay the beacon transmission to closest LTE uplink or if at all the UE 102 has to perform the beacon transmission which is falling in LTE DL then also the UE 102 will transmit the beacon assuming that beacon transmission duration is of the few microsecond order which may corresponds to one or two LTE OFDM symbol. So even if one or two OFDM symbols are corrupted, channel coding and HARQ procedure will help in recovering the data.

In some embodiments, the user equipment 102 sets a prohibit timer after reporting the interference information associated with the LTE carrier frequencies to the network entity 104. In these embodiments, the user equipment 102 defers re-transmission of the same or different interference information associated with the LTE carrier frequencies to the network entity 104 till the expiry of the prohibit timer. For example, if the user equipment 102 has transmitted the interference information to the network entity 104 and has received no response from the network entity 104, the user equipment 102 waits till the expiry of the prohibit timer for the response from the network entity 104 and re-transmits the same or different interference information to the network entity 104 upon expiry of the prohibit timer.

At step 212, the network entity 104 determines a solution for mitigating the in-device co-existence interference associated with the LTE carrier frequencies based on the interference information. At step 214, the network entity 104 configures the determined solution to mitigate the in-device co-existence interference to the user equipment 102. In some embodiments, the network entity 104 configures measurement restriction pattern(s) for radio link monitoring (RLM) measurements, radio resource management (RRM) measurements for mobility and channel state information (CSI) measurements. In other embodiments, the user equipment 102 derives the measurement pattern(s) by itself for restricting the above said measurements so that they are free from in-device interference and are further used for subsequent RLF and handover procedure respectively.

Based on the solution, in one embodiment, the user equipment 102 performs measurements on the configured measurement objects during the LTE active time such that the measurements are performed without the in-device co-existence interference. In another embodiment, the user equipment 102 performs measurements on the configured measurement objects during the LTE inactive time such that the measurements are performed without the in-device co-existence interference. In yet another embodiment, the user equipment 102 performs transmission and reception on the non-LTE frequencies during the LTE inactive time. In this embodiment, the user equipment 102 denies transmission on the non-LTE frequency when the measurements are performed on LTE frequencies associated with the configured measurement objects during the LTE inactive time.

Alternatively, the network entity 104 may send a reject message in response to the indication sent by the UE 102 that the LTE carrier frequencies associated with the measurement objects are affected by the in-device co-existence interference.

Figure 3 is a schematic representation 300 depicting interference scenarios of different frequencies in the user equipment 102 when LTE and non-LTE operations are carried out simultaneously. Based on the interference scenario, the user equipment 102 can determine the direction of interference (DOI). Consider that, the LTE module 108 and the non-LTE module 112 simultaneously transmits and receives over a LTE carrier frequency 310 corresponding to a measurement object and non-LTE carrier frequency 306, respectively. It can be seen that, the frequency separation between the LTE carrier frequency 310 and the non-LTE frequency 306 is around 86.5 MHz. Since the frequency separation is more than 50 MHz, during simultaneous operation of the LTE module 108 on the LTE carrier frequency 310 and the non LTE module 112 on the non LTE frequency 306, the LTE frequency 310 and the non-LTE frequency 306 do not interfere with each other.

However, if the operation of the LTE module 108 is configured with a measurement object on the LTE carrier frequency 304, the simultaneous operation of the LTE module 108 on the LTE carrier frequency 304 and the non-LTE module 112 on the non-LTE frequency 306 results in interference between the LTE carrier frequency 304 and the non-LTE carrier frequency 306. In this case, the LTE frequency 304 and the non-LTE frequency 306 are both victims of the in-device co-existence interference. The non-LTE module 112 operating on the non-LTE frequency 306 gets interfered with the transmission of LTE module 108 on the LTE carrier frequency 308, thereby leading to the in-device co-existence interference scenario where the non-LTE frequency 306 is victim of the in-device co-existence interference. Therefore, the user equipment 102 determines the direction of in-device coexistence interference based on the interference scenario and identifies a victim of in-device coexistence interference. For example, the UE 102 may indicate the direction of interference to the network entity 104 by setting a value in the interference information. The value comprises 'EUTRA', 'other', and 'both'; where the value 'EUTRA' implies the victim of in-device coexistence interference is the LTE radio technology, the value 'other' implies the victim of in-device coexistence interference is non-LTE radio technology, and the value 'both' implies the LTE radio technology and non-LTE radio technology are victims of the in-device coexistence interference. Accordingly, the network entity 104 ascertains the direction of interference based on the value set in the interference information.

Figure 4 is a schematic representation 400 illustrating one of the conditions to determine presence of in-device coexistence interference in the user equipment 102, according to one embodiment. Particularly, Figure 4 illustrates a graph where blocks 402 denote collisions between an ISM operation and an LTE operation in a defined time span or window. For example, the window can be a moving window over which the criterion is to be satisfied. The criterion includes a threshold number of collisions within a time window 406. When the criterion is satisfied, the instance can be treated as one trigger for reporting in-device coexistence interference to the network entity 104. In an embodiment, the time window 406 is determined during a negotiation between the network entity 104 and the user equipment 102. For instance, as shown in Figure 4, the number of collisions is shown as six. However, any number of collisions can be assigned as a threshold value. On the basis of these reports from the user equipment 102, the network entity 104 can observe implementation dependent time interval to determine whether the in-device co-existence interference is severe or not for the LTE module 108 or the non-LTE module 112 to operate simultaneously.

In another embodiment, other conditions to determine presence of interference are provided. The other conditions include one of number of Cyclic Redundancy Check (CRC) errors, De-sensing of receiver, LTE Tx De-sensing the ISM reception, and ISM transmission De-sensing the LTE reception. For example, De-sensing trigger criterion can be evaluated by defining a threshold for De-sense, measuring the number of such De-sensing happening over a time window and providing working conditions of the LTE module 108 and the non-LTE module 112 to the network entity 104. If there are more than a fixed number of De-sensing in a window, then the trigger condition is said to be satisfied.

The working conditions may include non-LTE operating frequency and/or closest frequency towards the LTE operation, LTE operating frequency, LTE transmission and reception power information, non-LTE transmission and reception power information, radio frequency filter mask details and the use case scenario in which the in-device co-existence interference is detected like BT (VOIP), BT (Multimedia Service), WiFi router, WiFi offload, GNSS. In an embodiment, based on such information and working conditions, the network entity 104 can decide if an in-device coexistence solution is to be provided to the UE 102 when the UE 102 indicates that the LTE carrier frequency associated with the measurement object is affected. Further, such information and working conditions can be integrated into the measurement reports for serving cell (e.g., the network entity 104) and neighbouring cells (e.g., prospective network entities 104) or using a new report.

Figure 5 is a schematic representation illustrating another condition to determine presence of in-device coexistence interference in the UE 102, according to one embodiment. The condition for determining presence of the in-device coexistence interference is based on variation in a Received Signal Strength Indicator (RSSI). The RSSI includes the received power (in watts) observed in Orthogonal Frequency Domain Multiplex (OFDM) symbols in the measurement bandwidth. The OFDM symbols are denoted using reference numerals 512 in Figure 5. The RSSI fluctuations are denoted as 506 and the RSSI threshold is denoted as 504 in Figure 5. Furthermore, the RSSI fluctuations 506 in an OFDM symbol exceeding the RSSI threshold 504 is denoted as 502 in Figure 5.

The measurement bandwidth is determined by the UE 102 based on the affected part of the bandwidth or spanning the whole of the operating band. Further, the measured bandwidth is determined in 'N' number of resource blocks, blocks of radio frequency spectrum in a limited or unlimited time. The limited time is also called as slots 508. The RSSI measurement in the measurement bandwidth include in-device coexistence interference, interference from co-channel serving and non-serving cells, adjacent channel interference, thermal noise, etc. In a time window 510 comprising several slots 508, the RSSI is measured in all OFDM symbols and when the RSSI fluctuation is above the RSSI threshold 504, then the corresponding symbol's RSSI is said to be affected by in-device coexistence interference denoted as 502 in Figure 5.

Further, Figure 5 denotes the effect of in-device radio frequency interference in the UE 102. The affected symbols 502 indicate presence of the in-device co-existence interference over the time-slots 508 while monitoring OFDM symbols. Further, the UE 102 and the network entity 104 may have a preset threshold RSSI 504. The fluctuations in RSSI are denoted using reference numeral 506. A sample time window 510 is provided to determine the presence of the in-device co-existence interference in the present embodiment. Hence, whenever RSSI fluctuates beyond the RSSI threshold 504 such OFDM symbols 502 are said to be affected by in-device coexistence interference. When the number of OFDM symbols affected by the in-device coexistence interference crosses a threshold count, then the user equipment 102 reports in-device co-existence interference indication to the network entity 104.

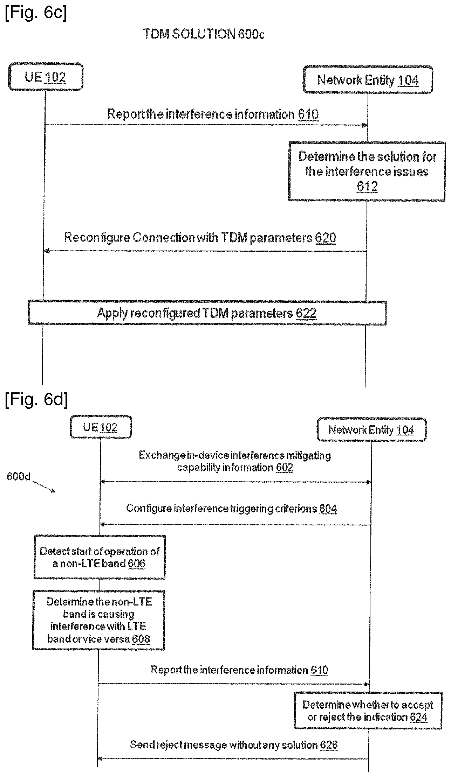

Figure 6a is a flow diagram 600a illustrating a detailed method of reporting in-device coexistence interference, according to one embodiment. At step 602, the UE 102 and the network entity 104 exchange capability of mitigating in-device co-existence interference. At step 604, the network entity 104 configures criterions or conditions for detecting detection of in-device co-existence interference at the UE 102. At step 606, the UE 102 detects start of operation of a non-LTE band 306. For example, the non-LTE band 306 can be an ISM band 306. At step 608, the UE 102 determines the non-LTE band 306 is causing interference with the LTE band such as 304 shown in Figure 3 or vice versa. Thereafter, the UE 102 reports the interference information to the network entity 104, in step 610. At step 611, the network entity 104 configures the UE with either a TDM solution or a FDM solution for mitigating the in-device co-existence interference, as will be illustrated in Figures 6b and 6c.

Figure 6b is a flow diagram 600b illustrating a method of configuring a Frequency Division Multiplexing (FDM) solution for mitigating the in-device co-existence interference in the UE 102, according to one embodiment. The flow diagram 600b illustrates one of the solutions that can be provided by the network entity 104 to the UE 102. More specifically, the flow diagram 600b illustrates a method for configuring a Frequency Division Multiplex (FDM) type solution. For example, if a LTE carrier frequency associated with a measurement object is affected by the in-device co-existence interference, the FDM solution may shift the LTE carrier frequency to a new frequency range which can provide the same service without the in-device co-existence interference.

The steps 602 to 608 are same as explained in Figure 6a. At step 610, the UE 102 reports the in-device co-existence interference information to the network entity 104. The network entity 104, on receiving the information on the in-device co-existence interference, determines the type of solution to be provided for mitigating the in-device co-existence interference, at step 612. At step 614, the network entity 104 transmits measurement re-configuration to the UE 102. For example, the measurement re-configuration can be one or more frequencies not affected by the in-device co-existence interference that would provide the same service as the LTE carrier frequency that is affected by the in-device co-existence interference. In another example, the measurement re-configuration includes one or more measurement objects, each measurement object represents a LTE carrier frequency.

The network entity 104 configuring one or more frequencies to shift the LTE carrier frequency affected by the in-device co-existence interference is referred to as Frequency Division Multiplexing (FDM) type solution. The UE 102, at step 616, applies the measurement re-configuration provided by the network entity 104. Thereafter, after performing measurements on one or more frequencies according to measurement objects, at step 618, the UE 120 reports measurements for the corresponding measurement objects to assist the network entity 104 to determine whether to perform the handover to reported frequency not affected by the in-device coexistence interference.

Figure 6c is a flow diagram 600c illustrating a method of configuring a Time Division Multiplexing (TDM) solution for mitigating in-device co-existence interference in the UE 102, according to another embodiment. The flow diagram 600c starts at the step 610. The steps 602, 604, 606, and 608 are same as explained in Figure 6a. At step 612, the network entity 104 determines a TDM solution for mitigating the in-device co-existence interference reported by the UE 102. In determining the TDM solution, the network entity 104 determines a set of parameters based on the information associated with the in-device co-existence interference. The set of parameters may be called as TDM parameters. For example, the TDM parameters may include a set of Discontinuous Reception (DRX) parameters, Hybrid Automatic Repeat Request (HARQ) bitmap reservation to restrict the number of LTE HARQ processes, and interference avoidance bitmaps if the transmission and reception collision avoidance is the purpose. At step 620, the network entity 104 reconfigures the UE 102 with the TDM parameters. At step 622, the user equipment 102 applies the reconfigured TDM parameters.

Figure 6d is a flow diagram 600d illustrating a method of reporting the in-device co-existence interference in the UE 102, according to another embodiment. The flow diagram 600d starts with the step 602. At step 602, the UE 102 and the network entity 104 exchange in-device co-existence interference capability information for mitigating the in-device co-existence interference. At step 604, the network entity 104 configures interference triggering criterions. At step 606, the UE 102 detects the start of operation of the non-LTE band. At step 608, the UE 102 determines that the non-LTE band is causing in-device co-existence interference with the LTE band or vice versa. At step 610, the UE 102 reports the in-device co-existence interference information to the network entity 104.

At step 624, the network entity 104 can perform one of the two options under certain conditions. A first option may be to accept the interference information associated with the in-device co-existence interference and provide a solution as described in Figure 6b or Figure 6c. In certain situation, the network entity 104 may neglect the interference information associated with the in-device co-existence interference. This may happen due to various conditions such as the network entity 104 is already occupied with such requests and reports that it could not accommodate and so on. Therefore, the network entity 104 rejects the indication sent by the UE 102 and sends a reject message without any solution, at step 626.

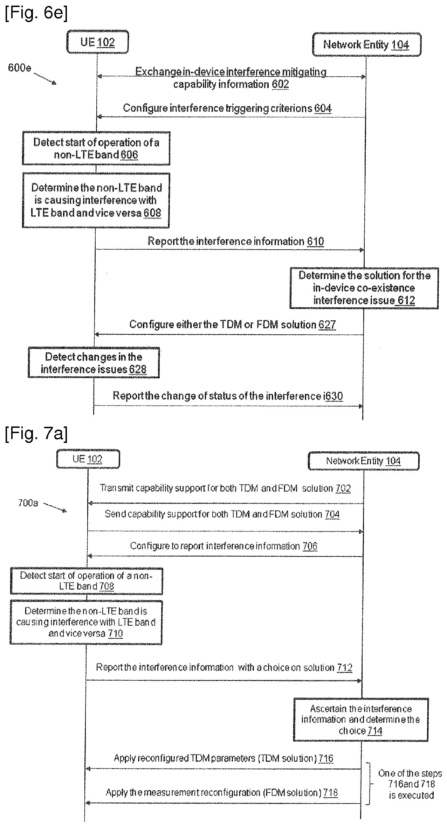

Figure 6e is a flow diagram 600e illustrating a method of reporting change of status of the in-device co-existence interference, according to yet another embodiment. It can be noted that, the steps 602 to 608 are same explained in Figures 6a to 6d. At step 610, in the present embodiment, the UE 102 reports the in-device co-existence interference to the network entity 104 for providing a suitable solution. In an exemplary embodiment, the network entity 104, at step 627, configures the UE with a TDM solution or a FDM solution. At step 628, the UE 102 detects change in status of the in-device co-existence interference. The change in status may include an indication that the in-device co-existence interference problem is over in the UE 102 or a change in the interference information provided by the UE 102. At step 630, the UE 102 reports the change in status of the in-device co-existence interference to the network entity 104. When the in-device co-existence interference information is changed, the UE 102 sends the updated in-device co-existence interference information to the network entity 104.

Figure 7a is a flow diagram 700 illustrating a method of configuring a solution for mitigating the in-device co-existence interference in the UE 102, according to one embodiment. At step 702, the network entity 104 transmits capability support for both TDM solution and FDM solution to the UE 102. At step 704, the UE 102 transmits capability support for both TDM solution and FDM solution. At step 706, the network entity 104 configures the UE 102 for reporting the in-device co-existence interference.

At step 708, the UE detects start of operation of a non-LTE band. At step 710, the UE 102 determines that the non-LTE band is causing interference to the LTE band or vice versa. At step 712, the UE 102 reports in-device co-existence interference with a choice of solution. At step 714, the network entity 104 ascertains the interference information and determines the choice indicated by the UE 102.

In an embodiment, the interference information specifically includes a measurement object identifier of the at least one carrier frequency, the Direction of Interference (DOI), and time domain multiplexing assistance information including Hybrid Automatic Repeat Request (HARQ) bit map pattern, and Discontinuous Reception (DRX) parameters.

In an embodiment, the network entity 104 and the UE 102 applies reconfigured Time Division Multiplex (TDM) parameters to the UE 102 to mitigate the in-device co-existence interference, at step 716 if the UE preferred choice is TDM solution. In another embodiment, the network entity 104 and the UE 102 applies measurement re-configuration (FDM solution) to mitigate the in-device co-existence interference, at step 718 if the UE preferred choice is FDM solution. Both, FDM and TDM solutions are discussed in detail in Figures 6b and 6c.

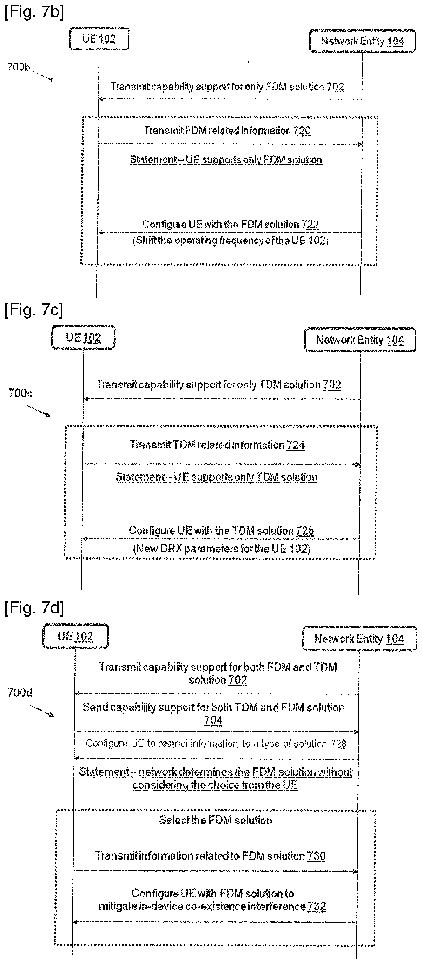

Figure 7b is a flow diagram 700b illustrating a method of configuring a solution for mitigating the in-device co-existence interference in the UE 102, according to another embodiment. The flow diagram 700b illustrates an exemplary embodiment where the UE 102 supports only FDM solution to be provided by the network entity 104. At step 702, the network entity 104 transmits capability support for only FDM solution to the UE 102. At step 724, the UE 102 transmits interference information related to FDM solution to the network entity 104. The reason behind the transmission of the FDM related information is the network entity 104 is capable of supporting only FDM solution to mitigate the in-device co-existence interference. At step 726, the network entity 104 configures the UE 102 with the determined FDM solution to mitigate the in-device co-existence interference. For example, one of the FDM solutions that the network entity 104 can provide to the UE 102 is shifting the LTE carrier frequency that is affected by the in-device co-existence interference to another range of frequency to prevent interference.

Figure 7c is a flow diagram 700c illustrating a method of configuring a solution for mitigating the in-device co-existence interference in the UE 102, according to yet another embodiment. At step 702, the network entity 104 transmits capability support for only TDM solution to the UE 102. At step 724, the UE 102 transmits interference information related to TDM solution to the network entity 104. The reason for transmitting TDM related information to the network entity 104 is that the network entity 104 supports only TDM solution to mitigate the in-device co-existence interference. At step 726, the network entity 104 configures the UE 102 with the determined TDM solution to mitigate the in-device co-existence interference. For example, the TDM solution determined by the network entity 104 can be newly configured Discontinuous Reception (DRX) parameters of the UE 102.

Figure 7d is a flow diagram 700d illustrating a method of configuring a solution for mitigating the in-device co-existence interference in the UE 102, according to further another embodiment. At step 702, the network entity 104 transmits capability support for both TDM solution and FDM solution to the UE 102. At step 704, the UE 102 transmits capability support for both TDM solution and FDM solution. At step 728, the network entity 104 configures the UE 102 to restrict in-device co-existence interference to a type of solution (e.g., FDM solution). It can be noted that, the network entity 104 does not consider the UE choice while configuring the solution. At step 730, the UE 102 transmits the interference information related to FDM solution for mitigating the in-device co-existence interference to the network entity 104. At step 736, the network entity 104 configures the UE 102 with the FDM solution to mitigate the in-device co-existence interference.

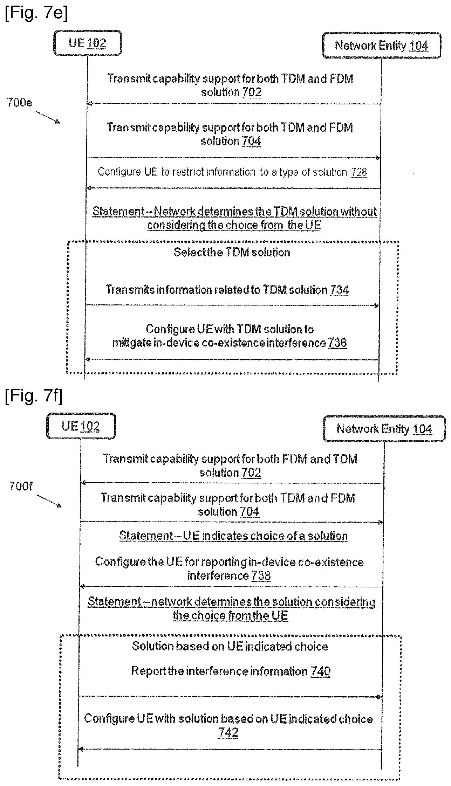

Figure 7e is a flow diagram 700e illustrating a method of configuring a solution for mitigating the in-device co-existence interference in the UE 102, according to yet a further embodiment. At step 702, the network entity 104 transmits capability support for both TDM solution and FDM solution to the UE 102. At step 704, the UE 102 transmits capability support for both TDM solution and FDM solution. At step 728, the network entity 104 configures the UE 102 to restrict in-device co-existence interference to a type of solution (e.g., TDM solution). It can be noted that the network entity 104 does not consider the UE choice while configuring the solution. At step 734, the UE 102 transmits the interference information related to TDM solution for mitigating the in-device co-existence interference to the network entity 104. At step 736, the network entity 104 configures the UE 102 with the TDM solution to mitigate the in-device co-existence interference.

Figure 7f is a flow diagram 700f illustrating a method of configuring a solution for mitigating the in-device coexistence interference in the UE 102, according to still another embodiment. At step 702, the network entity 104 transmits capability support for both TDM solution and FDM solution to the UE 102. At step 704, the UE 102 transmits capability support for both TDM solution and FDM solution and indicates a choice of the solution.. At step 738, the network entity 104 configures the UE 102 for reporting the in-device co-existence interference considering the choice of solution that the UE 102 has indicated. At step 740, the UE 102 reports the in-device co-existence interference information to the network entity 104. At step 742, the network entity 104 configures the UE with a solution for mitigating in-device co-existence interference based on UE indicated choice.

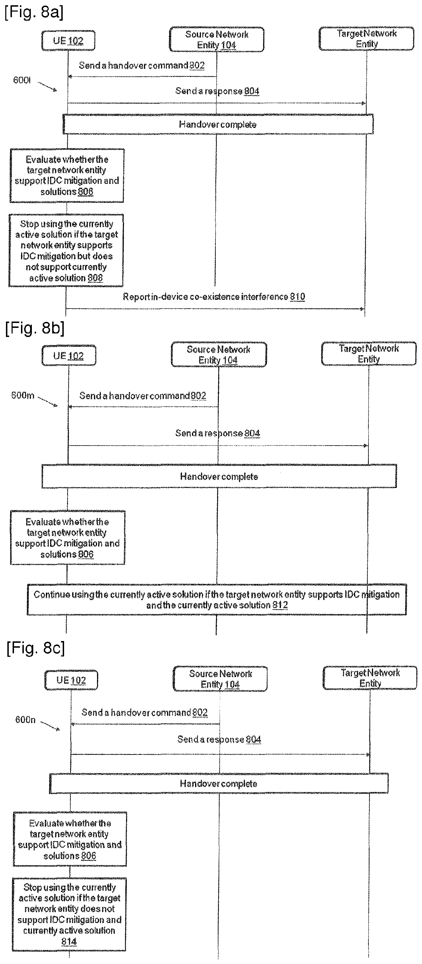

Figure 8a is a flow diagram 800a illustrating behavior of the user equipment 102 upon handover of a wireless connection from a source network entity to a target network entity, according to one embodiment. At step 802, the network entity 104 (hereinafter referred to as source network entity) sends a handover command for performing handover of wireless connection to another network entity (hereinafter referred to as target network entity). At step 804, the user equipment 102 sends a response to the handover command to the target network entity 104.

At step 806, the user equipment 102 evaluates whether the target network entity supports in-device co-existence interference mitigation and supports the currently configured solution. It can be noted that, the support for in-device co-existence interference mitigation and the solutions supported by the target network can be derived either from the handover command or System Information Blocks (SIBs) associated with the target cells. Also, when the handover of the ongoing wireless connection occurs, the UE 102 evaluates existence of the in-device co-existence interference. The evaluation may also be triggered based on the parameters for in-device interference indication trigger criterion as provided by the source network entity, the target network entity, UE implementation, Standard defined, criterion related to in-device interference is over, and/or capabilities difference between UE and network entity which may differ in in-device co-existence interference mitigation support and the solutions supported. Alternatively, the evaluation for in-device co-existence interference may also be triggered based on the parameters in the handover command. For example, the handover command may include information which may request UE to restart the in-device co-existence interference negotiation procedure. With this information, the target network entity will get a better picture of the current status of the in-device co-existence interference.

If the target network entity supports in-device co-existence interference but does not support currently active solution, at step 808, the UE 102 stops using the currently active solution. At step 810, the UE 102 reports the presence of in-device co-existence interference to the target network entity so that the target network entity provides the supported solution for resolving the in-device co-existence interference.

Figure 8b is a flow diagram 800b illustrating another behavior of the user equipment 102 upon handover of a wireless connection from the source network entity to the target network entity, according to one embodiment. If the target network entity supports in-device co-existence interference and the currently active solution, at step 812, the UE 102 continues using the currently active solution.

Figure 8c is a flow diagram 80c illustrating yet another behavior of the user equipment 102 upon handover of a wireless connection from the source network entity to the target network entity, according to one embodiment. If the target network entity does not support in-device co-existence interference and the currently active solution, at step 814, the UE 102 stops using the currently active solution.

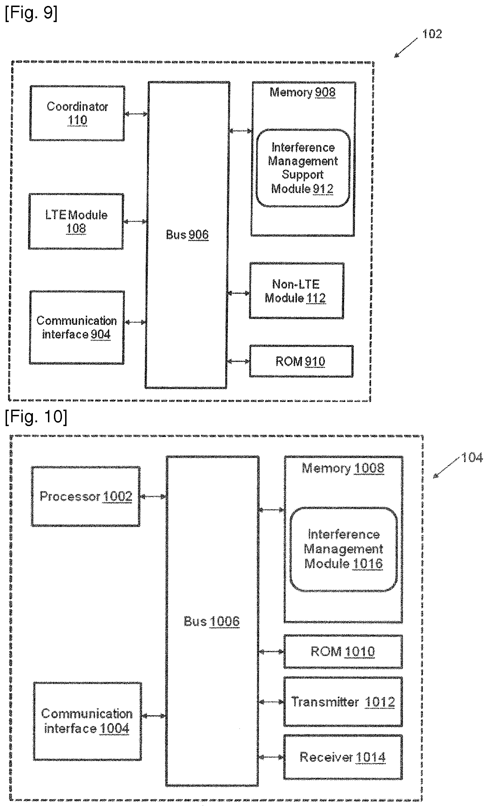

Figure 9 is a block diagram illustrating an exemplary User Equipment (UE) 102, in accordance with an embodiment of the present invention. The UE 102 in accordance with the present embodiment includes the LTE module 108, the coordinator 110, the non-LTE module 112, a communication interface 904, a bus 906, a memory 908, and a Read Only Memory (ROM) 910.

The coordinator 110, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The coordinator 110 may also include embedded controllers, such as generic or programmable logic devices or arrays, application specific integrated circuits, single-chip computers, smart cards, and the like.

The memory 908 and the ROM 910 may be volatile memory and non-volatile memory. The memory 908 includes an interference management support module 912 configured for handling in-device co-existence interference between LTE carrier frequency corresponding to measurement objects and non-LTE frequency in the UE 102. Further, the interference management support module 912 is configured to perform all the steps performed by the UE 102 from Figures 2, and 6a to 8c. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, Memory Sticks™, and the like. The interference management support module 912 may be stored in the form of machine-readable instructions on any of the above-mentioned storage media. The machine-readable instructions stored on the above mentioned storage media, when executed by the coordinator 110; cause the coordinator 110 of the UE 102 to perform one or more steps of Figures 2, and 6a to 8c.

The bus 906 acts as interconnect between various components of the network entity 104. The components such as the communication interface 904 is well known to the person skilled in the art and hence the explanation is thereof not provided.

Figure 10 is a block diagram of an exemplary network entity 104 in accordance with an embodiment of the present invention. In Figure 10, the network entity 104 includes a processor 1002, a bus 1006, a communication interface 1004, a memory 1008, a read only memory (ROM) 1010, a transmitter 1012, and a receiver 1014.

The processor 1002, as used herein, means any type of computational circuit, or a server or a base station. It may be also embodiment in devices such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 1002 may also include embedded controllers, such as generic or programmable logic devices or arrays, application specific integrated circuits, single-chip computers, smart cards, and the like.

The memory 1008 and the ROM 1010 may be volatile memory and non-volatile memory. The memory 1008 includes an interference management module 1016 configured for mitigating the in-device coexsitence interference present in the UE 102. Further, the interference management module 1016 is configured to perform all the steps performed by the network entity 104 in the Figures 2 and 6a to 8c. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, Memory Sticks™, and the like. The interference management module 1016 may also be stored in the form of machine-readable instructions on any of the above-mentioned storage media. The machine-readable instructions stored on the above mentioned storage media, when executed by the processor 1002; cause the processor 1002 to perform one or more steps of Figures 2, and 6a to 8c.

The machine-readable instructions may also be stored on a computer program, which when executed by the processor 1002, cause the processor 1002 to mitigate the in-device co-existence interference present in the UE 102, according to the teachings and herein described embodiments of the present subject matter. In one embodiment, the computer program may be included on a compact disk-read only memory (CD-ROM) and loaded from the CD-ROM to a hard drive in the non-volatile memory.

The bus 1006 acts as an interconnect between various components of the network entity 104. The components such as the transmitter 1012 and the receiver 1014, the communication interface 1004, are well known to the person skilled in the art and hence the explanation is thereof not provided.
The present embodiments have been described with reference to specific example embodiments, it will be evident that various modifications and changes may be made to these embodiments without departing from the scope of the various embodiments. Furthermore, the various devices, modules, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1. A method performed by a user equipment for handling an in-device co-existence, IDC, problem in the user equipment, the method comprising:
determining (204) whether at least one of one or more long term evolution, LTE, carrier frequencies for which a measurement object is configured is affected by the IDC problem; and
transmitting (210) a message including information associated with the at least one or more LTE carrier frequency affected by the IDC problem to inform a network entity wherein the message further comprising time domain multiplexing, TDM, based assistance information including a discontinuous reception, DRX, parameter if the at least one of the one or more LTE carrier frequencies for which the measurement object is configured is affected by the IDC problem.

2. An apparatus in a user equipment for handling an in-device co-existence, IDC, problem in the user equipment, the apparatus comprising:
a controller for determining (204) whether at least one of one or more long term evolution, LTE, carrier frequencies for which a measurement object is configured is affected by the IDC problem; and
a transmitter for transmitting (210) a message including information associated with the at least one or more LTE carrier frequency affected by the IDC problem to inform a network entity wherein the message further comprising time domain multiplexing, TDM, based assistance information including a discontinuous reception, DRX, parameter if the at least one of the one or more LTE carrier frequencies for which the measurement object is configured is affected by the IDC problem.

3. A performed by a network entity for handling an in-device co-existence, IDC, problem in a user equipment, the method comprising: receiving a message including information associated with at least one of one or more long term evolution, LTE, carrier frequencies affected by the IDC problem wherein the message further comprising time domain multiplexing, TDM, based assistance information including a discontinuous reception, DRX, parameter if the at least one of the one or more LTE carrier frequencies for which a measurement object is configured is affected by the IDC problem.

4. The method of claim 3, further comprising:
configuring the at least one of the one or more LTE carrier frequencies.

5. An apparatus in a network entity for handling an in-device co-existence, IDC, problem in a user equipment, the apparatus comprising: a receiver for receiving a message including information associated with at least one of one or more long term evolution, LTE, carrier frequencies affected by the IDC problem wherein the message further comprising time domain multiplexing, TDM, based assistance information including a discontinuous reception, DRX, parameter if the at least one of the one or more LTE carrier frequencies for which a measurement object is configured is affected by the IDC problem.

6. The apparatus of claim 5, further comprising:
a controller for configuring the at least one of the one or more LTE carrier frequencies.

## Patentansprüche

1. Verfahren, das von einer Benutzereinrichtung zum Handhaben eines vorrichtungsinternen Koexistenz, In-Device Co-existence - IDC, -Problems in der Benutzereinrichtung ausgeführt wird, wobei das Verfahren Folgendes umfasst:
Bestimmen (204), ob mindestens eine von einer oder mehreren Langzeitentwicklungs, Long Term Evolution - LTE, -Trägerfrequenzen, für die ein Messobjekt konfiguriert ist, von dem IDC-Problem betroffen ist; und
Senden (210) einer Nachricht, die Informationen im Zusammenhang mit der mindestens einen oder den mehreren LTE-Trägerfrequenzen aufweisen, die von dem IDC-Problem betroffen sind, um eine Netzwerkeinheit zu informieren, wobei die Nachricht ferner Folgendes umfasst auf Zeitdomänen-Multiplexing, Time Domain Multiplexing - TDM, basierende Unterstützungsinformationen, die einen diskontinuierlichen Empfangs, Discontinuous Reception - DRX, -Parameter aufweisen, falls die mindestens eine der einen oder mehreren LTE-Trägerfrequenzen, für die das Messobjekt konfiguriert ist, von dem IDC-Problem betroffen ist.

2. Vorrichtung in einer Benutzereinrichtung zum Handhaben eines vorrichtungsinternen Koexistenz, IDC, -Problems in der Benutzereinrichtung, wobei die Vorrichtung Folgendes umfasst:
eine Steuerung zum Bestimmen (204), ob mindestens eine von einer oder mehreren Langzeitentwicklungs, LTE, - Trägerfrequenzen, für die ein Messobjekt konfiguriert ist, von dem IDC-Problem betroffen ist; und
einen Sender zum Senden (210) einer Nachricht, die Informationen im Zusammenhang mit der mindestens einen oder den mehreren LTE-Trägerfrequenzen aufweisen, die von dem IDC-Problem betroffen sind, um eine Netzwerkeinheit zu informieren, wobei die Nachricht ferner Folgendes umfasst auf Zeitdomänen-Multiplexing, TDM, basierende Unterstützungsinformationen, die einen diskontinuierlichen Empfangs, DRX, -Parameter aufweisen, falls die mindestens eine der einen oder mehreren LTE-Trägerfrequenzen, für die das Messobjekt konfiguriert ist, von dem IDC-Problem betroffen ist.

3. Verfahren, das von einer Netzwerkeinheit zum Handhaben eines vorrichtungsinternen Koexistenz, IDC, -Problems in einer Benutzereinrichtung ausgeführt wird, wobei das Verfahren Folgendes umfasst:
Empfangen einer Nachricht, die Informationen im Zusammenhang mit mindestens einer von einer oder mehreren Langzeitentwicklungs, LTE-, -Trägerfrequenzen aufweist, die von dem IDC-Problem betroffen sind, wobei die Nachricht ferner Folgendes umfasst auf Zeitdomänen-Multiplexing, TDM, basierende Unterstützungsinformationen, die einen diskontinuierlichen Empfangs, DRX, -Parameter aufweisen, falls die mindestens eine der einen oder mehreren LTE-Trägerfrequenzen, für die ein Messobjekt konfiguriert ist, von dem IDC-Problem betroffen ist.

4. Verfahren nach Anspruch 3, ferner Folgendes umfassend:
Konfigurieren der mindestens einen der einen oder mehreren LTE-Trägerfrequenzen.

5. Vorrichtung in einer Netzwerkeinheit zum Handhaben eines vorrichtungsinternen Koexistenz, IDC, -Problems in einer Benutzereinrichtung, wobei die Vorrichtung Folgendes umfasst:
einen Empfänger zum Empfangen einer Nachricht, die Informationen im Zusammenhang mit mindestens einer von einer oder mehreren Langzeitentwicklungs, LTE-, - Trägerfrequenzen aufweist, die von dem IDC-Problem betroffen sind, wobei die Nachricht ferner Folgendes umfasst auf Zeitdomänen-Multiplexing, TDM, basierende Unterstützungsinformationen, die einen diskontinuierlichen Empfangs, DRX, -Parameter aufweisen, falls die mindestens eine der einen oder mehreren LTE-Trägerfrequenzen, für die ein Messobjekt konfiguriert ist, von dem IDC-Problem betroffen ist.

6. Vorrichtung nach Anspruch 5, ferner Folgendes umfassend:
eine Steuerung zum Konfigurieren der mindestens einen der einen oder mehreren LTE-Trägerfrequenzen.

## Revendications

1. Procédé effectué par un équipement d'utilisateur pour gérer un problème de coexistence intra-dispositif, IDC, dans l'équipement d'utilisateur, le procédé comprenant :
la détermination (204) si au moins l'une d'une ou plusieurs fréquences porteuses d'évolution à long terme, LTE, pour lesquelles un objet de mesure est configuré, est affectée par le problème IDC ; et
la transmission (210) d'un message comprenant des informations associées à l'au moins une ou plusieurs fréquences porteuses LTE affectées par le problème IDC pour informer une entité de réseau, dans lequel le message comprend en outre des informations d'assistance basée sur le multiplexage dans le domaine de temps, TDM, comprenant un paramètre de réception discontinue, DRX, si l'au moins une de l'une ou plusieurs fréquences porteuses LTE pour lesquelles l'objet de mesure est configuré est affectée par le problème IDC.

2. Appareil dans un équipement d'utilisateur pour gérer un problème de coexistence intra-dispositif, IDC, dans l'équipement d'utilisateur, l'appareil comprenant :
un organe de commande pour effectuer la détermination (204) si au moins l'une d'une ou plusieurs fréquences porteuses d'évolution à long terme, LTE, pour lesquelles un objet de mesure est configuré, est affectée par le problème IDC ; et
un émetteur pour effectuer la transmission (210) d'un message comprenant des informations associées à l'au moins une ou plusieurs fréquences porteuses LTE affectées par le problème IDC pour informer une entité de réseau, dans lequel le message comprend en outre des informations d'assistance basée sur le multiplexage dans le domaine de temps, TDM, comprenant un paramètre de réception discontinue, DRX, si l'au moins une de l'une ou plusieurs fréquences porteuses LTE pour lesquelles l'objet de mesure est configuré est affectée par le problème IDC.

3. Procédé effectué par une entité de réseau pour gérer un problème de coexistence intra-dispositif, IDC, dans un équipement d'utilisateur, le procédé comprenant :
la réception d'un message comprenant des informations associées à au moins l'une d'une ou plusieurs fréquences porteuses d'évolution à long terme, LTE, affectées par le problème IDC, dans lequel le message comprend en outre des informations d'assistance basée sur le multiplexage dans le domaine de temps, TDM, comprenant un paramètre de réception discontinue, DRX, si l'au moins une de l'une ou plusieurs fréquences porteuses LTE pour lesquelles un objet de mesure est configuré est affectée par le problème IDC.

4. Procédé selon la revendication 3, comprenant en outre :
la configuration de l'au moins une de l'une ou plusieurs fréquences porteuses LTE.

5. Appareil dans une entité de réseau pour gérer un problème de coexistence intra-dispositif, IDC, dans un équipement d'utilisateur, l'appareil comprenant :
un récepteur pour effectuer la réception d'un message comprenant des informations associées à au moins l'une d'une ou plusieurs fréquences porteuses d'évolution à long terme, LTE, affectées par le problème IDC, dans lequel le message comprend en outre des informations d'assistance basée sur le multiplexage dans le domaine de temps, TDM, comprenant un paramètre de réception discontinue, DRX, si l'au moins une de l'une ou plusieurs fréquences porteuses LTE pour lesquelles un objet de mesure est configuré est affectée par le problème IDC.

6. Appareil selon la revendication 5, comprenant en outre :
un organe de commande pour effectuer la configuration de l'au moins une de l'une ou plusieurs fréquences porteuses LTE.
